Europäisches Patentamt

European Patent Office

Office européen des brevets

(11) Publication number: **0 102 790**
**B1**

(12) EUROPEAN PATENT SPECIFICATION

(45) Date of publication of patent specification: **04.01.89**   (51) Int. Cl.⁴: **G 21 K 4/00,** G 03 C 5/17

(21) Application number: **83304763.2**

(22) Date of filing: **17.08.83**

(54) Storage & reconstruction apparatus for radiation image.

(30) Priority: **25.08.82 JP 147057/82**
**09.12.82 JP 214612/82**

(43) Date of publication of application:
**14.03.84 Bulletin 84/11**

(45) Publication of the grant of the patent:
**04.01.89 Bulletin 89/01**

(84) Designated Contracting States:
**DE FR GB NL**

(56) References cited:
**EP-A-0 022 564**
**GB-A-1 034 037**

(73) Proprietor: **KABUSHIKI KAISHA TOSHIBA
72, Horikawa-cho Saiwai-ku
Kawasaki-shi Kanagawa-ken 210 (JP)**

(72) Inventor: **Naruse, Yujiro
240, Sanmai-cho Kanagawa-ku
Yokohama-shi Kanagawa-ken Tokyo (JP)**
Inventor: **Shirouzu Shunji
254-12, Kamitsuchidana
Ayase-shi Kanagawa-ken Tokyo (JP)**

(74) Representative: **Shindler, Nigel et al
BATCHELLOR, KIRK & EYLES 2 Pear Tree Court
Farringdon Road
London EC1R 0DS (GB)**

Courier Press, Leamington Spa, England.

**Description**

This invention relates to an apparatus for storage and reconstruction of a radiation image, and more particularly to an apparatus for storage of a two-dimensional radiation image using a phosphor plate and for reconstruction of a stored radiation image.

Methods for observing a radiation image of an object by using radiation such as X-rays, α-rays, β-rays or γ-rays are commonly used in the fields of a medical diagnosis and non-destructive description.

Normally, a silver halide-based film is utilised as the radiation image storage medium. However new types of apparatus are being developed for the purpose of saving silver or to digitise the image signal.

A typical known system of this kind operates as follows:

In a storage stage, X-rays emitted from an X-ray source are used to irradiate an object such as a human body, and a transmitted radiation image is stored in an image storage phosphor plate. The image storage phosphor plate is made of a silver-activated barium fluoro-halide. Entering the X-ray into the image storage phosphor plate, activators are formed in the phosphor plate according to an X-ray image.

In the reconstruction stage, a laser beam from a He—Ne laser (wavelength: 633nm) or a He—Cd laser (wavelength: 325nm) is deflected by a deflector, and the phosphor plate is scanned by the deflected laser beam. The phosphor plate is simultaneously moved in a direction orthogonal to the scanning direction. Consequently, fluorescent light whose intensity corresponds to that of the incident X-ray is emitted from the phosphor plate. The fluorescent light is collected by a light collecting sheet which is made of an acrylic resin, then is directed onto a photo multiplier. A current signal obtained from the photo multiplier is digitalised in a data processing device, and, after the desired image treatment has been carried out, the radiation image is displayed by a image dislay device. A number of image processing methods are known. One typical method is the so-called pulse image mode processing method, in which a plurality of subtraction images are formed in synchronisation with the pulsed X-ray exposure, then a single image is formed by adding the subtraction images. Other methods such as so-called continuous mode processing and time interval difference mode processing are also well known.

However, these prior art methods have certain disadvantages.

Fluorescent light emitted from a radiation image storage medium by laser beam scanning, has both a light component which is collected by the light collecting sheet and a light component which is transmitted in the medium and is not collected by the light collecting sheet. In a silver halide-based radiation image storage medium, the light component which is transmitted and is not collected by the light collecting sheet amounts to more than 50%. Therefore, the amount of light collected by the light collecting means is small, output signal from the photo multiplier is also reduced, and the quality of the reconstructed radiation image is degraded. In order to avoid this problem, the intensity of the radiation must be increased.

However, an increase of the radiation intensity is harmful to the human body, and also puts a load on the system.

In the prior art, it is also difficult to reduce the necessary time period for reconstruction of the radiation image, because a mechanical scanning means such as the deflector and a mechanism for moving the radiation image storage medium are used when the light excitation is carried out against the radiation image storage medium to reconstruct the radiation image.

Furthermore, for the same reason, an instantaneous image processing is difficult, because the radiation image storage medium must be set up to the attached reconstruction apparatus after the radiation image is stored in the medium.

Accordingly, the present invention seeks to provide a new and improved storage and reconstruction apparatus for radiation images which may increase the light collecting efficiency from the radiation image storage medium, and will provide a high quality reconstructed image.

The present invention also seeks to provide a new and improved storage and reconstruction apparatus for a radiation image which requires a reduced time period from the storage stage to the reconstruction stage by avoiding the use of mechanical scanning means.

According to the present invention there is provided a storage and reconstruction apparatus for radiation images comprising a radiation source, a radiation image storage medium in which activators are formed in accordance with a radiation image obtained by irradiation from the radiation source through an object, a light source which emits a light beam having a wavelength component effective to excite the radiation image storage medium, scanning means for scanning the radiation image storage medium with the light beam emitted from the light beam sources, light detecting means for detecting the fluorescent light emitted from the radiation image storage medium and generating an electric signal, and image processing means for processing the electric signal to reconstruct the radiation image, characterised in that said radiation image storage medium is made of phosphor glass powder which includes at least silver, phosphorous and oxygen and in which activators are formed.

On embodiment of the invention will now be described by way of example with reference to the accompanying drawings, in which:

Figure 1 is a schematic view showing a radiation image storage stage according to the present invention;

Figure 2 is a sectional view of a radiation image storage medium shown in Figure 1;

Figure 3 shows the relation between powder diameter and spatial resolution;

Figure 4 is a schematic view showing emission of the fluorescent light from the radiation image storage medium when a light beam for exciting the medium is irradiated;

Figures 5a and 5b show light detecting characteristics of the conventional storage medium and of the storage medium according to the present invention, respectively;

Figure 6 is a sectional view of another embodiment of the radiation image storage medium:

Figure 7 is a schematic view showing a stage of reconstruction of the radiation image according to the present invention; and

Figure 8 is a schematic view showing the incorporation of the radiation image storage medium in the reconstruction means.

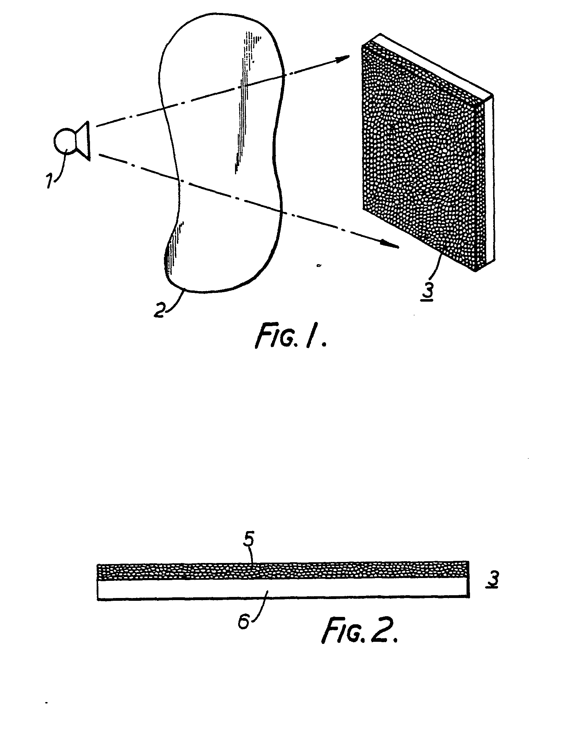

In Figure 1, an X-ray from an X-ray tube 1 irradiates an object 2 which is, for example, a human body. Then the transmitted X-ray irradiates a radiation image storage medium 3, and activators corresponding to the entered X-ray are formed therein.

The radiation image storage medium 3 is, as shown in Figure 2, constructed of phosphor glass powder 5 which is deposited in a plurality of layers on a substrate 6. The substrate 6 is made of Ni metal plate which has approximately the same coefficient of expansion as that of the phosphor glass powder 5. Typically the medium 3 is about $20 \times 30$ cm$^2$, the Ni plate 6 being about 1mm thick. The total thickness of the phosphor glass powder layer should be limited to 1mm or less, in order to get a high emission efficiency of the fluorescent light. Further the diameter of the glass powder 5 is between 5 μm and 500 μm, and preferably between 10 μm and 100 μm. The reason for this is that if the diameter of the glass powder is larger than 500 μm, a satisfactory resolution cannot be obtained, while if it is smaller than 5 μm, light collecting efficiency is decreased even though the resolution is high.

In the embodiment shown in Figure 2, the total thickness of the glass powder layer is about 0.5mm, the diameter of the glass powder being 44 μm.

It should be noted here that the glass powder need not be spherical, and the term "diameter" denotes an average diameter.

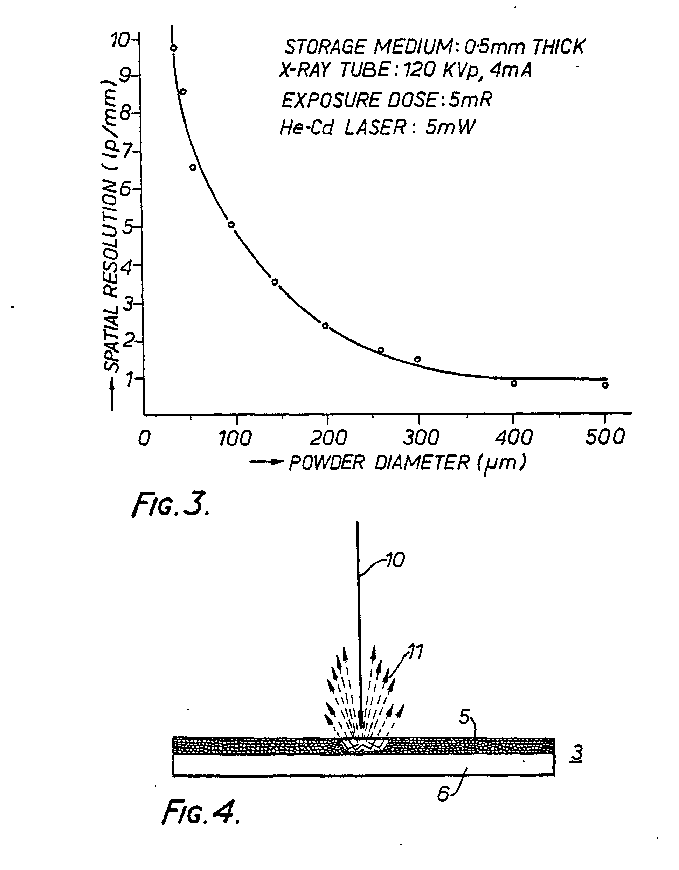

Figure 3 shows a relationship between diameter of powder glass and resolution. In this figure, dimension 1P/mm of the resolution represents a number of line pairs per 1mm. The data shown in this figure have been taken under the conditions that the total thickness of the glass powder layer is 0.5mm, the X-ray tube current is 4mA, the exposure dose is 5mR, and the output power of the He—Cd laser is 5mW.

The phosphor glass powder 5 consists of the compositions shown in Table 1. Each composition in Table 1 is represented by weight percent. In these compositions, Ag, P and O are essential. As shown in Example No. 2, Ba may be added in order to increase so-called stopping power against radiation, and to make the radiation image storage medium thin.

One example of a method of manufacturing the image storage medium 3 is to mix 150 grams of butyl acetate and 50 grams of poly vinyl butyral per 100 grams of phosphor glass powder. This mixture is then applied to the Ni metal plate 6 by a spray.

| Ex. No. Comp. | 1 | 2 | 3 | 4 | 5 | 6 | 7 |
|---|---|---|---|---|---|---|---|
| Ag | 3.7 | 7.4 | 3.3 | 4.8 | 0.5 | 1.4 | 0.2 |
| P | 33.4 | 27.2 | 34.5 | 34.0 | 33.1 | 33.2 | 31.6 |
| O | 53.7 | 42.2 | 53.5 | 52.7 | 51.3 | 51.4 | 51.1 |
| Li | 3.7 | - | 3.6 | 3.5 | - | - | - |
| Al | 4.7 | 4.7 | 5.1 | 5.0 | 6.1 | 5.5 | 6.1 |
| Na | - | - | - | - | 9.0 | 6.6 | 11.0 |
| Mg | - | - | - | - | - | 1.9 | - |
| B | 0.8 | - | - | - | - | - | - |
| Ba | - | 10.8 | - | - | - | - | - |

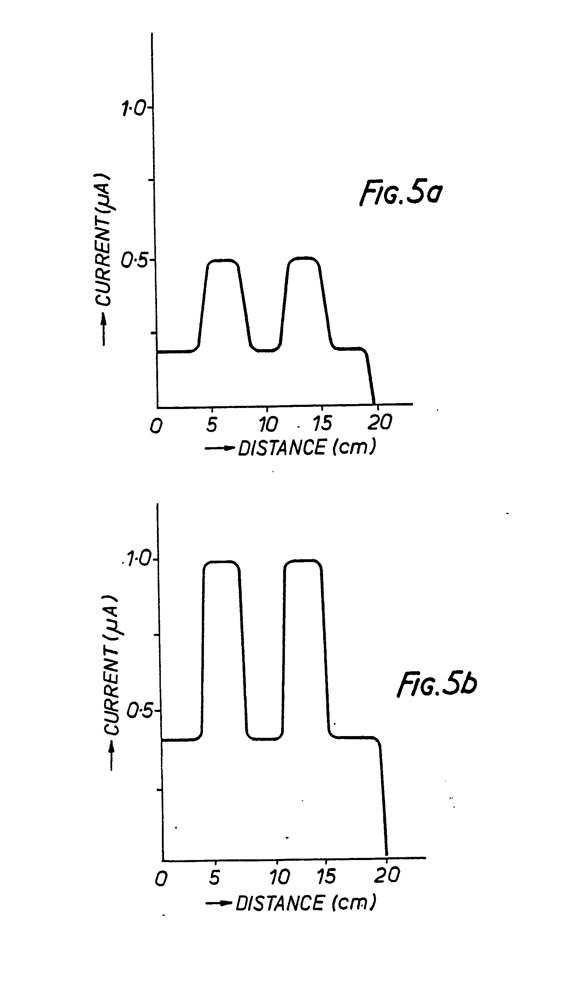

Figure 4 shows the emission of the fluorescent light from the radiation image storage medium 3 in which the radiation image is stored, by irradiation of an excitation light.

In Figure 4, reference numeral 10 designates an excitation light. When the excitation light 10 irradiates the medium 3, a fluorescent light 11 is emitted from the medium 3, and the light 11 is then detected by a light detecting means. The wavelength of the emitted light 11 is between 500nm and 700nm.

Here the component of light which is transmitted in the medium 3 and is not collected by the light detecting means is less than 10 percent, because the emitted light in the medium 3 is scattered by the glass powder 5, and almost all the light is collected by the light detecting means. Therefore, according to the image storage medium 3 of the present invention, the light collecting efficiency is high, leading to a marked improvement of the reconstructed radiation image.

Figure 5a shows the light detecting characteristics with a conventional storage medium and Figure 5b shows the same using the storage medium of the present invention.

In these figures, the axes of ordinate and abscissa represent the output current of the light detector and the distance in the medium, i.e. scanning beam location, respectively. Furthermore, in both figures, the conditions of the experiment are the same, namely, the same as those described in Figure 3.

As is apparent from Figures 5a and 5b, an output signal of about twice the normal level is obtained from the light detecting means, utilising the present invention.

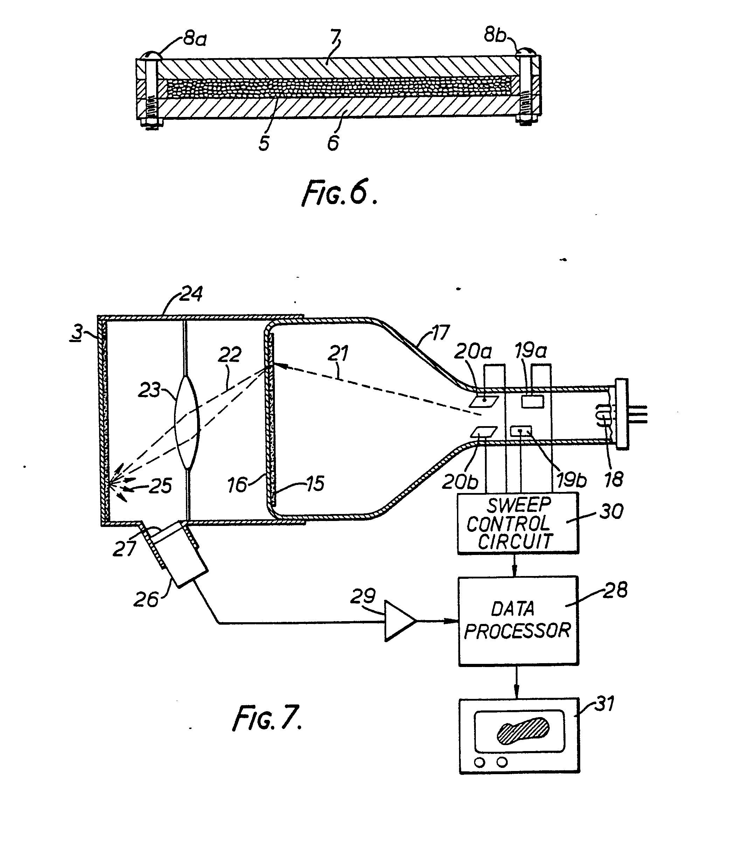

The radiation image storage medium shown in Figure 2 is manufactured by a binding method using a chemical solution. Other methods may be used, for example Figure 6 shows another embodiment of the medium of the present invention. The phosphor glass powder 5 shown in this figure is held between an Ni metal plate 6 and a transparent glass plate 7. Screws 8a, 8b are preferably used to hold the assembly together. According to this embodiment, taking in and out of the glass powder is easily carried out, and therefore, a reciprocation of the glass powder is possible, reducing the time required for manufacture.

As described above, in the storage and reconstruction apparatus according to the present invention, the radiation image storage medium is made of phosphor glass powder. Therefore, light which is not collected in the conventional medium, is converted to a component which is collected by the detector, according to the present invention. Consequently, light collection efficiency is improved, and the quality of the reconstructed picture is also improved. In other words, the intensity of the radiation can be reduced in comparison with the conventional apparatus, and therefore, harmful effects to the human body and loads of the system can be minimised.

Figure 7 is a schematic view showing the reconstruction of the radiation image according to the present invention.

In Figure 7, reference numeral 3 represents the radiation image storage medium shown in Figure 2. The radiation image is already stored in the medium 3. At the rear of the medium 3, a phosphor film 15 is arranged. The phosphor film 15 is formed inside a face plate 16 of a vacuum tube 17. In the vacuum tube 17, an electron gun 18, a pair of horizontal deflection electrodes 19a and 19b, and a pair of vertical deflection electrodes 20a and 20b are deposited. These deflection electrodes 19a, 19b, 20a and 20b deflect an electron beam 21 so that vacuum tube 17 forms a cathode ray tube.

The phosphor film 15 emits fluorescent light 22 as a result of the electron beam scanning. The light 22 emitted from he phosphor film 15 has a wavelength component which is effective to excite the radiation image storage medium 3. One example of the phosphor film 15 is a film having $Ca_2Mg\ Si_2O_7[Ge]$ as a main component, the wavelength of the light emitted from this film being about 360nm.

An optical lens 23 is arranged between the phosphor film 15 and the medium 3. The optical lens 23 focuses the excitation light 22 emitted from the phosphor film 15 onto the medium 3. The medium 3 is scanned and excited in order by the condensed light.

Reference numeral 24 denotes a supporting structure which supports the medium 3, the optical lens 23, and photo multiplier 26.

The excited medium 3 emits fluorescent light 25 corresponding to the stored radiation image, and the light 25 is detected by the photo multiplier 26 through an optical filter 27. The optical filter 27 selectively passes light whose wavelength is between 500nm and 700nm. Therefore, the excitation light 22 from the phosphor film 15 is prevented from passing through the filter 27, only the light from the medium 3 is detected by the photo multiplier 26.

The photo multiplier 26 converts a light signal into an electric signal, and the output signal of the multiplier 26 is fed to a data processor 28 through an amplifier 29. The data processor 28 processes an input radiation image data, and reconstructs the radiation image.

Reference numeral 30 represents a sweep control circuit which controls the deflection scanning of the electron beam, while sends a synchronising signal to the data processor 28.

Several kinds of radiation image processing by the processor 28 are well known, as described before. A reconstructed image made by this method is displayed by an image display device 31.

It will be understood that a photodiode may also be used as the light detector, and magnetic deflection is also usable for the electron beam scanning.

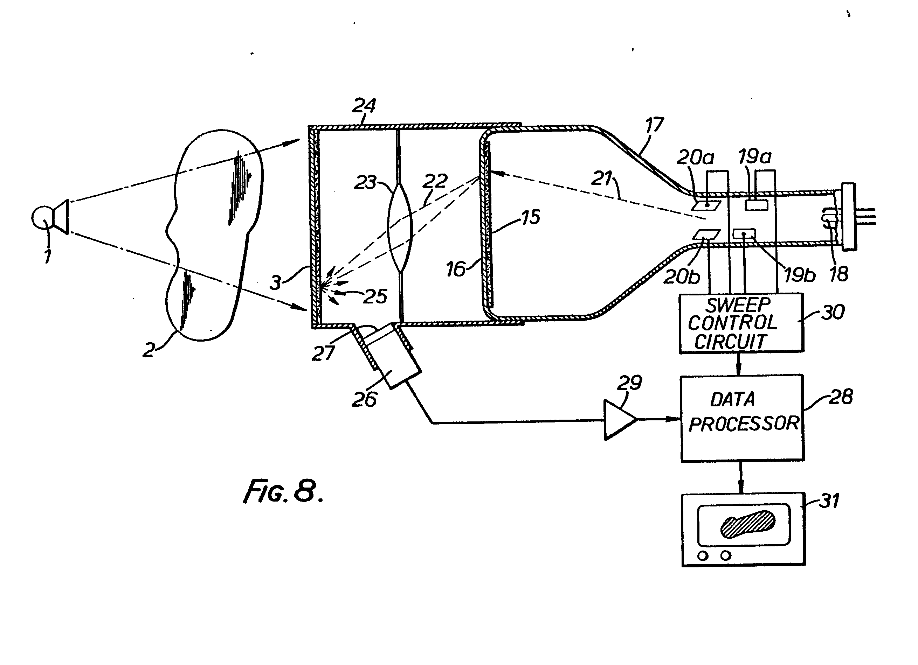

Figure 8 shows an incorporation of the radiation image storage medium in the reconstruction means.

In Figure 8, a radiation image storage medium 3 in which a radiation image has not been stored yet, is set up on the reconstruction apparatus. Under this condition, an object 2 irradiated by an X-ray from an X-ray tube 1. As a result thereof, a radiation image is stored in the medium 3. As soon as the storage is finished, electron scanning is started, and the medium 3 is excited by excitation light 22 from a phosphor film 15.

In this way, by incorporating the radiation image storage and reconstruction can be successively carried out.

As described above, in the storage and reconstruction apparatus according to the present invention, scanning of the radiation image storage medium by the excitation light is carried out not by using a mechanical scanning means, but by using an electrical scanning means. As a result thereof, the time required for reconstruction of the radiation image can be reduced. Furthermore, because the radiation image storage medium can be easily incorporated into the reconstruction system, an instantaneous image processing can be carried out.

The radiation image storage and reconstruction apparatus of the present invention may be effectively applicable to the several kinds of medical diagnostic systems using a radiation image processing apparatus.

Further, the term "radiation" used in the present invention will be understood to include not only X-rays, but also α-rays, β-rays and γ-rays.

## Claims

1. A storage and reconstruction apparatus for radiation images comprising a radiation source, a radiation image storage medium in which activators are formed in accordance with a radiation image obtained by irradiation from the radiation source through an object, a light source which emits a light beam having a wavelength component effective to excite the radiation image storage medium, scanning means for scanning the radiation image storage medium with the light beam emitted from the light beam sources, light detecting means for detecting the fluorescent light emitted from the radiation image storage medium and generating an electric signal, and image processing means for processing the electric signal to reconstruct the radiation image, characterised in that said radiation image storage medium is made of phosphor glass powder (5) which includes at least silver, phosphorous and oxygen and in which activators are formed.

2. A storage and reconstruction apparatus for a radiation image according to claim 1, wherein said radiation image storage medium comprises a substrate (6) on which said phosphor glass powder (5) is deposited.

3. A storage and reconstruction apparatus for radiation image according to claim 1 or claim 2, wherein the diameter of the glass of said glass powder (5) is between 5 µm and 500 µm, and the thickness of the layer of said glass powder (5) is less than 1mm.

4. A storage and reconstruction apparatus for radiation image according to claim 3, wherein the diameter of the glass of said glass powder (5) is between 10 µm and 100 µm.

5. A storage and reconstruction apparatus for radiation image according to claim 2, wherein the coefficient of expansion of said substrate (6) is approximately the same as that of said phosphor glass powder (5).

6. A storage and reconstruction apparatus for radiation image according to claim 5, wherein said substrate (6) is a nickel plate.

**Patentansprüche**

1. Einrichtung zur Speicherung und Rekonstruktion von Strahlungsbildern, mit einer Strahlungsquelle mit einem Strahlungsbild-Speichermedium, in dem Aktivatoren in Übereinstimmung mit einem Strahlungsbild gebildet sind, die durch Bestrahlung von der Strahlungsquelle durch ein Objekt hindurch gewonnen worden sind, mit einer Lichtquelle, die einen Lichtstrahl aussendet, der einen Wellenlängenanteil hat, der in der Lage ist, das Strahlungsbild-Speichermedium zu erregen, mit Mitteln zur Abtastung des Strahlungsbild-Speichermediums mit Hilfe eines Lichtstrahls, der von den Lichtstrahlquellen ausgesandt ist, mit Lichtdetektormitteln zur Feststellung des Fluoreszenzlichtes, das von dem Strahlungsbild-Speichermedium emitiert worden, ist und zur Erzeugung eines elektrischen Signals, und mit Bildverarbeitungsmitteln zur Verarbeitung des elektrischen Signals zur Rekonstruktion des Strahlungsbildes, dadurch gekennzeichnet, daß das Strahlungsbild-Speichermedium aus Phosphorglaspulver (5) besteht, das wenigstens Silber, Phosphor und Sauerstoff enthält und in dem Aktivatoren gebildet sind.

2. Einrichtung zur Speicherung und Wiederherstellung eines Strahlungsbildes nach Anspruch 1, dadurch gekennzeichnet, daß das Strahlungsbild-Speichermedium ein Substrat (6) aufweist, auf dem das genannte Phosphorglaspulver aufgebracht ist.

3. Einrichtung zur Speicherung und Rekonstruktion eines Strahlungsbildes gemäß Anspruch 1 oder 2, dadurch gekennzeichnet, daß der Durchmesser des Glases des Glaspulvers (5) zwischen 5 µm und 500 µm und daß die Dicke der Schicht des Glaspulvers (5) weniger als 1 mm beträgt.

4. Einrichtung zur Speicherung und Rekonstruktion eines Strahlungsbildes gemäß Anspruch 3, dadurch gekennzeichnet, daß der Durchmesser des Glases des Glaspulvers (5) zwischen 10 µm und 100 µm beträgt.

5. Einrichtung zur Speicherung und Rekonstruktion eines Strahlungsbildes gemäß Anspruch 2, dadurch gekennzeichnet, daß der Ausdehnungskoeffizient des Substrates (6) näherungsweise der gleiche ist wie der des genannten Phosphorglaspulvers (5).

6. Einrichtung zur Speicherung und Wiederherstellung eines Strahlungsbildes gemäß Anspruch 5, dadurch gekennzeichnet, daß das Substrat (6) eine Nick platte ist.

**Revendications**

1. Appareil pour conserver et reconstruire des images produites par des radiations ou des rayonnements comprenant une source de radiations, un milieu de conservation d'images de radiations dans lequel des activateurs sont formés conformément à l'image obtenue en irradiant, avec une source de radiations, un objet, une source lumineuse qui émet un faisceau lumineux dont une composante de la longueur d'onde peut effectivement exciter le milieu de conservation d'images de radiations, des moyens d'analyse pour analyser le milieu de conservation d'images de radiations avec le faisceau lumineux issu de la source lumineuse, des moyens de détection pour détecter la lumière fluorescente émise par le milieu de conservation d'images de radiations et qui engendre un signal électrique et des moyens de traitement pour traiter ledit signal électrique afin de reconstruire l'image de radiations, caractérisé en ce que ledit milieu de conservation d'images de radiations est fait d'une poudre de verre au phosphore qui contient, au moins, de l'argent, du phosphore et de l'oxygène et dans lequel des activateurs sont formés.

2. Appareil pour conserver et reconstruire des images de radiations ou de rayonnements selon la revendication 1, caractérisé en ce que ledit milieu de conservation d'images de radiations comprend un substrat (6) sur lequel une poudre de verre au phosphore (5) a été déposée.

3. Appareil pour conserver et reconstruire des images de radiations ou de rayonnements selon la revendication 1 ou 2, caractérisé en ce que la granulométrie de ladite poudre de verre (5) est comprise entre 5 µm et 500 µm, et en ce que l'épaisseur de la couche de poudre de verre (5) est inférieure à 1 m.

4. Appareil pour conserver et reconstruire des images de radiations ou de rayonnements selon la revendication 3, caractérisé en ce que la granulométrie de ladite poudre de verre (5) est comprise entre 10 µm et 100 µm.

5. Appareil pour conserver et reconstruire des images de radiations ou de rayonnements selon la revendication 2, caractérisé en ce que le coefficient de dilatation thermique dudit substrat (6) est approximativement le même que celui de ladite poudre de verre (5).

6. Appareil pour conserver et reconstruire des images de radiations ou de rayonnements selon la revendication 5, caractérisé en ce que ledit substrat (6) est une plaque de nickel.

FIG. 1.

FIG. 2.

STORAGE MEDIUM: 0·5mm THICK
X-RAY TUBE: 120 KVp, 4mA

EXPOSURE DOSE: 5mR

He-Cd LASER: 5mW

*Fig.3.*

*Fig.4.*

Fig.5a

Fig.5b

*FIG. 6.*

*FIG. 7.*

SWEEP CONTROL CIRCUIT

DATA PROCESSOR

4

FIG. 8.